# EUROPÄISCHE PATENTSCHRIFT

(11) **EP 3 531 651 B1**
(45) Veröffentlichungstag und Bekanntmachung des Hinweises auf die Patenterteilung: **22.02.2023**
(21) Anmeldenummer: 18158521.7
(22) Anmeldetag: 26.02.2018
(51) Int. Cl.: H04L 69/18, H04L 69/08

(54) **SYSTEM UND VERFAHREN ZUR ÜBERTRAGUNG ZEITKRITISCHER ANALOGER SIGNALE UND DIGITALER DATEN**
SYSTEM AND METHOD FOR TRANSMITTING TIME-SENSITIVE ANALOGUE SIGNALS AND DIGITAL DATA
SYSTÈME ET PROCÉDÉ DE TRANSMISSION DE SIGNAUX ANALOGIQUES ET DE DONNÉES NUMÉRIQUES CRITIQUES DANS LE TEMPS

(43) Veröffentlichungstag der Anmeldung: 28.08.2019
(73) Patentinhaber: Rohde & Schwarz GmbH & Co. KG, 81671 München (DE)
(72) Erfinder: Langguth, Torsten, 82008 Unterhaching (DE); Schwarz, Andreas, 83026 Rosenheim (DE)
(74) Vertreter: Rupp, Christian

(56) Entgegenhaltungen:
- WO-A2-01/97420
- DE-A1-102009 022 771
- DE-A1-102016 000 234
- US-A1- 2004 146 034
- US-A1- 2009 234 207
- US-A1- 2015 198 967

## Beschreibung

Die Erfindung betrifft ein System und ein Verfahren zur Übertragung von zeitkritischen analogen Signalen und/oder Daten zwischen mindestens einem sendeseitigen Gerät und einem empfangsseitigen Gerät innerhalb eines mobilen oder stationären Teilnehmers.

Zur Unterstützung von Einsatzkräften, z.B. bei Rettungseinsätzen zu Wasser, zu Lande und zu Luft, insbesondere bei Katastropheneinsätzen, trägt Interoperabilität entscheidend zur Erfassung der vorliegenden Lage bei und ermöglicht so ein rasches und koordiniertes Handeln aller Beteiligten respektive Teilnehmer.

Für die verschlüsselte und unverschlüsselte Übertragung von Informationen zwischen einzelnen Teilnehmern, bevorzugt zur Übertragung von Sprach- und Datenkommunikation zwischen mobilen Teilnehmern (z.B. Flugzeuge, Schiffe, Drohnen) untereinander aber auch zwischen mindestens einem mobilen Teilnehmer und mindestens einem stationären Teilnehmer (z.B. Stützpunkt der Küstewache am Festland) oder auch zwischen zwei oder mehreren stationären Teilnehmern untereinander, werden je nach Anwendungsfall unterschiedliche Geräte zu sogenannten Kommunikationslinien verknüpft. Beispielsweise besteht eine Kommunikationslinie zur verschlüsselten Sprachkommunikation mindestens aus einem oder mehreren Sprach/Empfangsterminals, einem Ver/Entschlüsselungsgerät und einer Sende/Empfangseinheit beispielsweise einem Funkgerät mit Antennenkoppler und Antenne. Eine Kommunikationslinie zur verschlüsselten Datenkommunikation enthält mindestens eine Datenanwendung, ein Ver/Entschlüsselungsgerät, ein Modem und eine Sende/Empfangseinheit, beispielsweise ein Funkgerät mit Antennenkoppler und Antenne. Kommunikationslinien zur Datenlink-Kommunikation verbinden ein Datenlink-Terminal mit einer Sende/Empfangseinheit, beispielsweise einem Funkgerät mit Antennenkoppler und Antenne. Die Datenlink-Kommunikation wird beispielsweise zur Übertragung von Sensor- oder Kamerabildern eines mobilen Teilnehmers zu einem stationären Teilnehmer verwendet, aber auch zur Übertragung von Telekommandos vom stationären Teilnehmer zum mobilen Teilnehmer. In dieser Anmeldung ist ein Datenlink Terminal ein Gerät, welches ein bereits verschlüsseltes Analogsignal oder auch ein verschlüsseltes serielles digitales Signal zur Weiterleitung ausgibt bzw. empfangen kann.

Geräte zur Sprach- und Datenkommunikation, insbesondere Datenlink-Terminals können in unterschiedlichen Modi die folgenden Schnittstellentypen verwenden:
- Schmalband-Audio
- Breitband-Audio
- Serielle Daten

Aktuell existierende Geräte zur Datenlink-Kommunikation, beispielsweise in Schiffskommunikationssystemen, zeichnen sich durch den Einsatz von speziellen Schnittstellen für die serielle Datenübertragung bzw. die Sprachübertragung, wie z.B. RS232, Schmalband-Audio und Breitband-Audio aus. Dies gilt auch für Terminals zur Sprach- und Datenkommunikation im Allgemeinen und nicht nur für Datenlink-Terminals. Bei diesen Schnittstellen kommt üblicherweise eine geräte-spezifische Verkabelung zur Anwendung, da gerade Datenlink-Kommunikationslinien extrem kurze Verzögerungszeiten in der Kommunikation zwischen Datenterminal und Sende/Empfangseinheit respektive Funkgerät im Bereich von wenigen Millisekunden erfordern.

Allerdings führt diese Verkabelung oft zu Einschränkungen in der Reichweite, da beispielsweise die Kabellänge bei RS-232 auf ca. 15 m beschränkt ist. Durch diese begrenzte Kabellänge, aber auch durch die direkt herzustellende Kabelverbindung ergeben sich Einschränkungen im räumlichen Einbau der Geräte, da die Geräte nahe beieinander verbaut sein müssen.

Diese wenig flexible Verbindungsmöglichkeit einzelner Geräte ist auch nachteilig, da unterschiedliche Geräte unterschiedliche Schutzbedürfnisse haben, d.h. einige Geräte müssen in einem gesicherten Bereich untergebracht sein, da die Geräte eine Schnittstelle für verschlüsselte und unverschlüsselte Daten darstellen. Aufgrund der derzeit erforderlichen Kabelverbindung zwischen unterschiedlichen Geräten einer Kommunikationslinie ist es nicht immer möglich, die Anforderungen bezüglich des Schutzbedürfnisses einzuhalten.

Ein weiterer Nachteil der oben genannten direkten Kabelverbindung zwischen beispielsweise dem Datenterminal und der Sende/Empfangseinheit liegt darin, dass kein anderer Sprach oder Datenterminal mit der Sende/Empfangseinheit verbunden werden kann, ohne eine aufwändige Neuverkabelung durchzuführen. Somit ist beispielsweise eine Sende/Empfangseinheit, die prinzipiell sowohl zur Datenlink-Kommunikation für Sprache als auch für Datenanwendungen geeignete ist, durch eine direkte Verbindung mit einem Datenlinkterminal auf Datenlink-Kommunikation eingeschränkt. Ein so angeschlossenes Funkgerät ist für Sprachkommunikation ohne aufwändige Neuverkabelung nicht nutzbar, auch wenn es aktuell keinen Bedarf für Datenlink-Kommunikation auf dem Schiff oder der Landstation gibt. Auch für den Fall, dass ein Sende/Empfangsgerät defekt ist, ist nachteilig eine aufwändige und meist zeitintensive Umverkabelung auf ein funktionierendes Send/Empfangsgerät notwendig.

Zur Abdeckung aller Kommunikationsbedürfnisse sind somit die mobilen und stationären Teilnehmer mit Überkapazitäten an Geräten ausgestattet, da keine Mehrfachverwendung der Geräte für mehrere Nutzungsarten auf einfache Art und Weise möglich ist. Dies verteuert die Kommunikationsanlagen auf Schiffen und Landstationen.

Eine Lösung bezüglich der oben genannten Probleme, welche durch eine direkte Kabelverbindung zwischen Sprachterminal respektive Datenterminal und beispielsweise einem Sende/Empfangsgerät verursacht sind, ist in der US 8,418,092 B2 genannt. Das Dokument beschreibt ein Verfahren zur Herstellung eines integrierten Schaltkreises (IC; engl.: Integrated circuit) und den mit dem Verfahren realisierten integrierten Schaltkreis. Der integrierte Schaltkreis beinhaltet zwei voneinander getrennte Einheiten, die mittels einer Busverbindung miteinander kommunizieren, wobei jede der Einheiten ein eigenes Taktsignal (clock-signal) aufweist. Eine Einheit besteht beispielsweise aus einem Prozessor verbunden mit einer Bus-Adapter Einheit und die zweite Einheit besteht aus einer Bus-Adapter Einheit verbunden mit einem Speichersystem, wobei allerdings die beiden Bus-Adapter über eine synchrone Taktleitung miteinander verbunden sind. Die Busadapterkomponenten bilden jeweils eine Schnittstelle zwischen der jeweiligen Einheit und dem gemeinsamen Bussystem, welches eine Kommunikation zwischen den beiden Einheiten erlaubt. Somit wird es möglich, dass der Prozessor flexibel mit verschiedenen Speichereinheiten verbunden werden kann.

Die US 8,418,092 B2 zeigt zwar eine flexible Verschaltung verschiedener Einheiten miteinander; nachteilig beschreibt aber das Dokument lediglich eine flexible Verschaltung innerhalb eines integrierten Schaltkreises. Des Weiteren ist eine Taktleitung zwischen den beiden Einheiten erforderlich, was insbesondere bei einer Ausgestaltung einer flexiblen Verschaltung zwischen zwei voneinander getrennten Geräten zu einem erheblichen Mehraufwand führt.

Die Druckschrift DE 10 2009 022 771 A1 betrifft ferner ein Verfahren und ein System zum Übertragen von Fahrzeug-Diagnosedaten zu einem Fahrzeug-Dienstleister nutzen Sensoren zum Erzeugen von Sensorsignalen, die den Status bzw. die Beschaffenheit von Fahrzeugkomponenten anzeigen.

Die Druckschrift WO 01/97420 A2 betrifft einen Sender zur Verwendung in einem Kommunikationssystem, welcher einen Takteingang zum Empfang eines Taktsignals und Eingangsports umfasst, welche mit externen Signalquellen gekoppelt sind, um Eingangssignale zu empfangen, die synchron mit Modulationsfrequenzen moduliert sind, welche rational und fraktional mit der Taktfrequenz und miteinander in Beziehung stehen.

Die Druckschrift US 2004/0146034 A1 betrifft ein drahtloses Audiosystem zum Übertragen und Empfangen von gemultiplexten Audio- und Dateninformationen.

Der Erfindung liegt daher die Aufgabe zugrunde, ein System und ein Verfahren zur Übertragung von zeitkritischen analogen Signalen und/oder Daten zwischen einem sendeseitigen und einem empfangsseitigen Gerät zu schaffen, wobei eine flexible Verschaltung zwischen den sendseitigen und empfangsseitigen Geräten realisierbar sein soll. Dies soll durch den Einsatz handelsüblicher Technologien (Internet Protokoll, Ethernet) und kostengünstig realisierbar sein.

Die Erfindung wird bezüglich des Systems durch die Merkmale des Anspruchs 1 und bezüglich des Verfahrens durch die Merkmale des Anspruchs 11 gelöst. Die davon abhängigen Ansprüche enthalten vorteilhafte Weiterbildungen der Erfindung.

Der Erfindung liegt die Erkenntnis zugrunde, zeitkritische analoge Signale und Daten zwischen mindestens zwei sendeseitigen und und mindestens zwei empfangsseitigen Gerät nicht direkt über ein Kabel zu verbinden sondern das empfangsseitige Gerät mit einem sendeseitigen Protokollwandler zu verbinden und das empfangsseitige Gerät mit einem empfangsseitigen Protokollwandler zu verbinden. Zwischen sendeseitigem Protokollwandler und empfangsseitigem Protokollwandler findet eine Übertragung von Datenpaketen über ein Datenübertragungsnetzwerk statt und eine flexible Verschaltung zwischen sendeseitigen und empfangsseitigen Geräten ist durchführbar.

Zwischen den mindestens zwei sendeseitigen und mindestens zwei empfangsseitigen Gerät werden Protokollwandler dazwischengeschaltet, die in der Lage sind, mittels Datenpaketen, insbesondere Internet Protokoll (IP) Datenpaketen über ein Datennetzwerk, respektive ein Internet Protokoll (IP) Netzwerk miteinander zu kommunizieren. Somit kann eine direkte Kabelverbindung zwischen sendeseitigen und empfangsseitigen Geräten entfallen und eine flexible Verschaltung zwischen sendeseitigen und empfangsseitigen Geräten wird ermöglicht.

Bevorzugt umfasst der sendeseitige Protokollwandler mindestens eine Eingangsschnittstelle zum Anschluss analoger Signale und/oder Daten empfangsseitiger Geräte und des Weiteren eine erste Verarbeitungseinheit.

Vorteilhafterweise erlaubt die Eingangsschnittstelle den Anschluss von sendeseitigen Geräten, die entweder analoge Signale oder Daten aber auch sowohl analoge Signale und Daten ausgeben können. Die Eingangsschnittstelle kann je einen Eingang für analoge Signale und Daten umfassen oder auch einen Eingang der analoge Signale und Daten empfangen kann. Mit dem Begriff Daten sind hier im Gegensatz zu den analogen Signalen digitale Signale, beispielsweise serielle Daten gemeint. Analoge Signale sind bevorzug Breitband Signale.

Bevorzugt führt die Eingangsschnittstelle empfangene Daten respektive digitale Signale, wie beispielsweise serielle Daten direkt der ersten Verarbeitungseinheit zu und weist mindestens einen Analog/Digitalwandler auf, der die analogen Signale erfasst, in einen ersten digitalen Datenstrom umwandelt und der ersten Verarbeitungseinheit zuführt.

Vorteilhafterweise beinhaltet die Eingangsschnittstelle einen Analog/Digitalwandler, der die ankommenden anlogen Signale zur weiteren Verarbeitung innerhalb der ersten Verarbeitungseinheit in digitale Signale, umsetzt. Bereits digitale Signale, also die ankommenden Daten, werden direkt der ersten Verarbeitungseinheit zugeführt. Üblicherweise erlaubt die Eingangsschnittstelle den Anschluss von bis zu acht sendeseitigen Geräten, was die Verschaltungsmöglichkeiten erhöht. Es ist auch denkbar, dass eine Funktionalität zur analog/digital-Umsetzung eines analogen Eingangssignals innerhalb der Verarbeitungseinheit vorhanden ist.

Bevorzugt generiert die erste Verarbeitungseinheit aus dem erfassten ersten digitalen Datenstrom und/oder den erfassten Daten Datenpakete, insbesondere Internet Protokoll (IP) Datenpakete.

Vorteilhafterweise wird die erste Verarbeitungseinheit mit einem sehr schnellen Prozessor oder einem sogenannten "Field Programmable Gate Array" (FPGA), also einem programmierbaren Gatter-Baustein, der besonders geeignet für die Verarbeitung komplexer Signale ist, implementiert. Die Realisierung der ersten Verarbeitungseinheit mit einem schnellen Prozessor oder FPGA erlaubt eine schnelle Datenverarbeitung und die Erzeugung kleiner Datenpakete, die rasch übertragen werden können. Es ist denkbar in den FPGA zusätzlich einen schnellen Speicher zu integrieren, beispielsweise einen sogenannten "Block R_AM" (BRAM) Speicher oder beispielsweise ein Register. Es ist auch denkbar, die Leistungsfähigkeit der ersten Verarbeitungseinheit weiter zu erhöhen, indem der schnelle Speicher die Funktionalität der Erzeugung der Datenpakete, insbesondere der Internet Protokoll (IP) Datenpakete, beinhaltet. Es ist auch denkbar, die schnelle Datenverarbeitung weiter zu erhöhen, indem der schnelle Speicher und die Verarbeitungseinheit, beispielsweise der FPGA, in welchem der schnelle Speicher integriert ist, jeweils einen eigenen Taktgenerator (Clock) aufweisen.

Bevorzugt erzeugt die erste Verarbeitungseinheit Datenpakete mit einem Paketintervall kleiner 3ms, bevorzugt kleiner 1ms und weiter bevorzugt kleiner 0,5ms.

Vorteilhafterweise erlaubt ein Datenpaketintervall kleiner 3ms eine rasche Übertragung der zeitkritischen analogen Signale und/oder Daten von einem sendeseitigen Gerät zu einem empfangsseitigen Gerät.

Bevorzugt legt die erste Verarbeitungseinheit Datenpakete durch Hinzufügen einer definierten Information im Type of Service Feld (ToS-Feld) im Kopfdatenbereich der Datenpakete als Prioritäts-Datenpakete fest.

Vorteilhafterweise erlaubt die Festlegung von Datenpakten als Prioritätsdatenpakte die Nutzung einer allgemeinen Datenübertragungsnetzwerk-Struktur, ohne die Übertragung zeitkritischer analoger Signale und/oder Daten zu verzögern. Prioritätsdatenpakete werden innerhalb des Datenübertragungsnetzwerks bevorzugt behandelt, insbesondere an Switches oder Routern. Wenn also gleichzeitig andere nicht zeitkritische Daten übertragen werden, werden diese gegenüber den Prioritätsdaten nachranging verarbeitet bzw. innerhalb des Übertragungsnetzwerkes weitergeleitet.

Bevorzugt weist der empfangsseitige Protokollwandler eine zweite Verarbeitungseinheit und mindestens eine Ausgangschnittstelle zur Ausgabe analoger Signale und/oder Daten auf.

Bevorzugt weist die zweite Verarbeitungseinheit einen Datenpakete-Puffer und einen Taktgenerator auf und variiert basierend auf einem Füllstand des Datenpakete-Puffers die Taktrate des Taktgenerators. Vorzugsweise wird die Größe des Datenpakete-Puffers derart gewählt, dass nicht mehr als drei Datenpakete, insbesondere Internet Protokoll (IP) Datenpakete erfasst bzw. zwischengespeichert werden können.

Vorteilhafterweise ist der Taktgenerator der zweiten Verarbeitungseinheit mit dem Datenpakete-Puffer rückgekoppelt und kann seinen Takt also seine Taktfrequenz anhand des Füllstandes des Datenpakete-Puffers dynamisch verändern.

Bevorzugt erzeugt die zweite Verarbeitungseinheit aus den empfangenen Datenpaketen einen zweiten digitalen Datenstrom respektive Daten und leitet diese an die Ausgangsschnittstelle weiter.

Bevorzugt stellt die Ausgangsschnittstelle die von der zweiten Verarbeitungseinheit empfangenen Daten direkt an einem ersten Ausgang, bevorzugt einem digitalen Ausgang, bereit und weist mindestens einen Digital/Analog-Wandler auf, der den zweiten digitalen Datenstrom in ein analoges Signal umwandelt und an einem zweiten Ausgang bereitstellt, bevorzugt einem analogen Ausgang.

Vorteilhafterweise beinhaltet die Ausgangsschnittstelle einen Digital/Analog-Wandler, der den ankommenden zweiten digitalen Datenstrom in ein analoges Signal zur Ausgabe an ein empfangsseitiges Gerät umsetzt. Bereits digitale Signale, also die ankommenden Daten, werden direkt an einem Anschluss respektive Ausgang bereitgestellt. Üblicherweise erlaubt die Ausgangsschnittstelle den Anschluss von bis zu acht empfangsseitigen Geräten, was die Verschaltungsmöglichkeiten erhöht.

Bevorzugte Ausführungsbeispiele der Erfindung werden nachfolgend unter Bezugnahme auf die Zeichnung lediglich beispielhaft beschrieben. In der Zeichnung zeigt:
- Fig. 1: ein Ausführungsbeispiel des erfindungsgemäßen Systems zur flexiblen Verschaltung sendeseitiger und empfangsseitiger Geräte;
- Fig. 2: ein Ausführungsbeispiel des erfindungsgemäßen Systems welches den Übertragungspfad vom sendeseitigen Gerät zum empfangsseitigen Gerät sowie vom empfangsseitigen Gerät zum sendeseitigen Gerät zeigt;
- Fig. 3: eine Detailübersicht des erfindungsgemäßen sendeseitigen Protokollwandlers;
- Fig. 4: eine Detailübersicht des erfindungsgemäßen empfangsseitigen Protokollwandlers;
- Fig. 5: ein Beispiel für die Realisierung eines Daten-Pufferspeichers mit verschiedenen Füllständen;
- Fig. 6: ein Beispiel für die Realisierung eines Daten-Pufferspeichers mit verschiedenen Füllständen und einem festgelegten oberen Schwellwert;
- Fig. 7: ein Beispiel für die Realisierung eines Daten-Pufferspeichers mit verschiedenen Füllständen und einem festgelegten unteren Schwellwert; und
- Fig. 8: ein Flussdiagramm zur Darstellung der einzelnen Schritte der erfindungsgemäßen Methode.

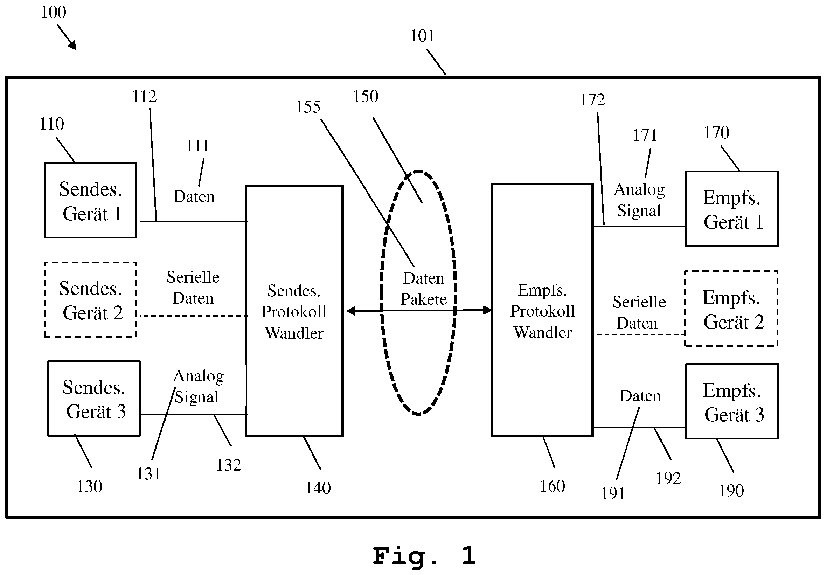

Fig. 1 zeigt das erfindungsgemäße System 100 zur Übertragung von zeitkritischen analogen Signalen 131 und Daten 111 zwischen sendeseitigen Geräten 110, 130 und empfangsseitigen Geräten 170, 190 innerhalb eines mobilen oder stationären Teilnehmers 101.

Ein mobiler Teilnehmer kann beispielsweise ein Schiff sein, welches mit einem stationären Teilnehmer, beispielsweise einem Stützpunkt der Küstenwache an Land kommunizieren möchte.

Sendeseitige Geräte 110, 130 können beispielsweise Sprachterminals sein, die analoge Signale ausgeben, die verschlüsselt oder auch unverschlüsselt sind. Sendeseitige Geräte 110, 130 können beispielsweise auch Datenterminals sein, die Datenanwendungen bereitstellen und digitale Signale respektive Daten, insbesondere serielle Daten ausgeben. Die ausgegebenen Daten können sowohl verschlüsselt oder auch unverschlüsselt sein. Dem jeweiligen sendeseitigen Gerät 110, 130 kann auch ein Modem nachgeschaltet sein.

Empfangsseitige Geräte sind beispielsweise Funkgeräte, welche mit verschiedenen Antennen verschaltet werden können und analoge Signale und/oder Daten, insbesondere serielle Daten mittels Funkübertragung an einen stationären oder mobilen Teilnehmer senden.

Die sendeseitigen Geräte 110, 130 sind mittels Verbindungsleitungen 112, 132 mit einer Eingangsschnittstelle des sendeseitigen Protokollwandlers 140 verbunden. Der sendeseitige Protokollwandler 140 erzeugt aus den empfangenen analogen Signalen 131, insbesondere Breitbandsignalen und Daten, insbesondere seriellen Daten 111 Datenpakete 155, die über ein Datenübertragungsnetzwerk 150 an einen empfangsseitigen Protokollwandler 160 übertragen werden.

Der empfangsseitige Protokollwandler 160 wandelt die empfangenen Datenpakete 155 wieder in analoge Signale und Daten um und sendet diese analogen Signale und Daten über die Ausgangsschnittstelle des empfangsseitigen Protokollwandlers 160 an die empfangsseitigen Geräte 170, 190, welche mittels Verbindungsleitungen 172, 192 mit der Ausgangsschnittstelle des empfangsseitigen Protokollwandlers 160 verbunden sind.

Das System 100 erlaubt die flexible, veränderbare Übertragung von Signalen 131 respektive Daten 111 von jedem sendeseitigen Gerät 110, 130 zu jedem empfangsseitigen Gerät 170, 190.

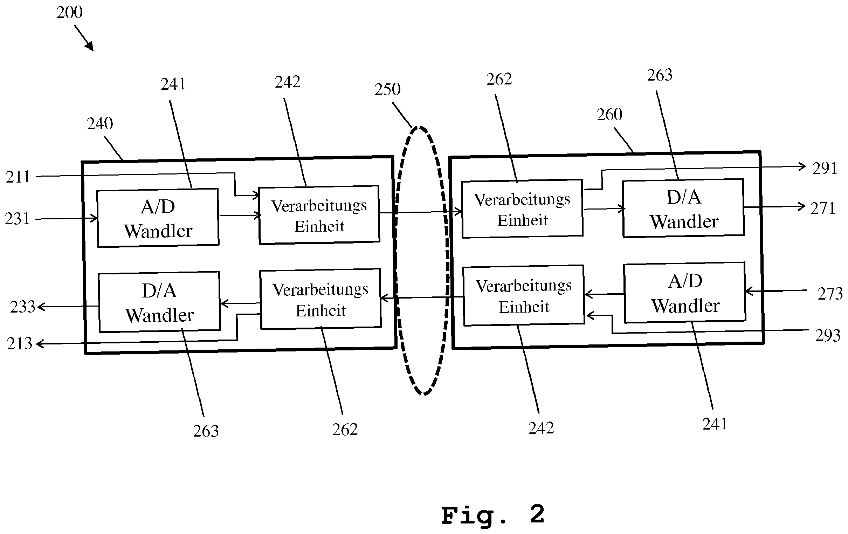

Fig. 2 soll zeigen, dass der sendeseitige Protokollwandler 240 analoge Signale 231 und/oder Daten 211 von einem sendeseitigen Gerät empfängt und über das Datenübertragungsnetzwerk 250 mittels Datenpaketen an den empfangsseitigen Protokollwandler 260 überträgt. Des Weiteren ist der sendeseitige Protokollwandler 240 in der Lage, Datenpakete von dem empfangsseitigen Protokollwandler 260 über das Datenübertragungsnetzwerk 250 zu empfangen, entsprechend zu verarbeiten und als analoges Signal 233 und/oder als Daten 213 an ein sendeseitiges Gerät zu senden.

Analog dazu ist der empfangsseitige Protokollwandler 260 in der Lage, Datenpakete über das Datenübertragungsnetzwerk 250 zu empfangen, entsprechend zu verarbeiten und als analoges Signal 271 und/oder Daten 291 an ein empfangsseitiges Gerät zu senden. Ebenso kann der empfangsseitige Protokollwandler 260 von einem empfangsseitigen Gerät analoge Signale 273 und/oder Daten 293 empfangen und über das Datenübertragungsnetzwerk 250 mittels Datenpaketen an den sendeseitigen Protokollwandler 240 übertragen.

Die Kommunikation zwischen sendeseitigen und empfangsseitigen Geräten ist in diesem Beispiel dadurch bidirektional möglich, dass für jede Übertragungsrichtung je ein Analog/Digital-Wandler 241, einen Digital/AnalogWandler 263, eine erste Verarbeitungseinheit 242 und eine zweite Verarbeitungseinheit 262 vorhanden sind. Es ist auch eine Voll-Duplex Übertragung denkbar, ohne die angeführten Komponenten in zweifache Ausführung bereitstellen zu müssen.

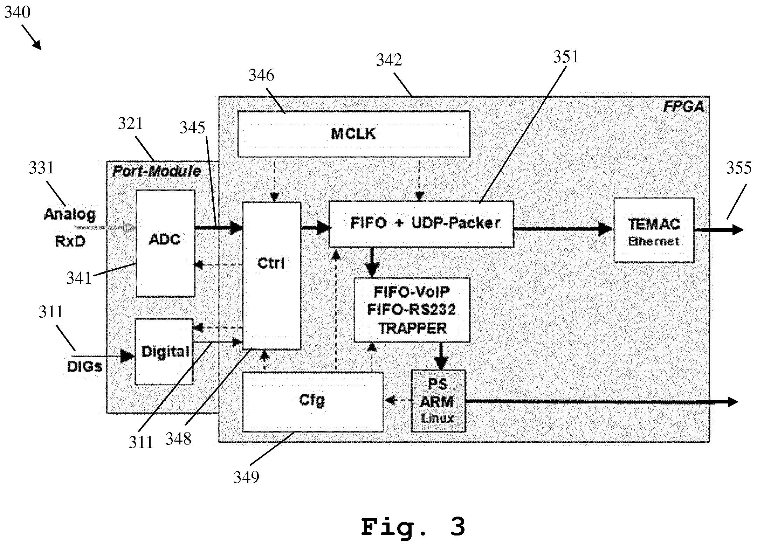

Fig. 3 zeigt den erfindungsgemäßen sendeseitigen Protokollwandler 340 bestehend aus einer Eingangsschnittstelle 321, die dazu dient, analoge Signale 331, beispielsweise Breitband-Signale von einem sendeseitigen Gerät zu empfangen und einem Analog/DigitalWandler 341 zuzuführen, der aus den analogen Signalen 331 einen digitalen Datenstrom 345 erzeugt und der ersten Verarbeitungseinheit 342, vorzugsweise einem "Field Programmable Gate Array" (FPGA), zuführt. Des Weiteren leitet die Eingangsschnittstelle 321 Daten 311, beispielsweise serielle Daten, welche von einem sendeseitigen Gerät empfangen werden, direkt an die erste Verarbeitungseinheit 342 weiter. Vorzugsweise werden der Datenstrom 345 und die Daten 311 von der Eingangsschnittstelle 321 an eine Steuereinheit 348 innerhalb der ersten Verarbeitungseinheit 342 geleitet, wobei die Steuereinheit 348 die empfangene Daten 311 und/oder Datenströme 345 an eine Datenverpackungseinheit 351 zur Erzeugung von Datenpaketen 355, bevorzugt Internet Protokoll IP Datenpaketen, sendet. Die erste Verarbeitungseinheit weist auch einen Taktgenerator 346 auf, der mit der Steuereinheit 348 und mit der Datenverpackungseinheit 351 verbunden ist. Bevorzugt ist eine Konfigurationseinheit 349 vorhanden, die mit der Steuereinheit 348 verbunden ist und die eine beliebige Verschaltung des vom Analog/Digitalwandler 341 erzeugten Datenstroms 345 und/oder der Daten 311, die von den sendeseitigen Geräten direkt empfangen werden, mit der Datenverpackungseinheit 351 ermöglicht.

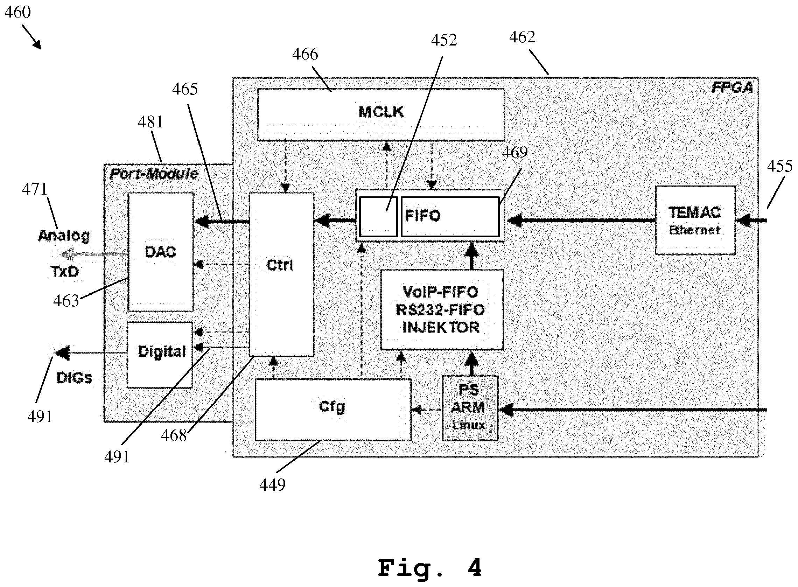

Fig. 4 zeigt den erfindungsgemäßen empfangsseitigen Protokollwandler 460 bestehend aus einer zweiten Verarbeitungseinheit 462, die Datenpakte 455, bevorzugt Internet Protokoll (IP) Datenpakete, von einem Datenübertragungsnetzwerkt empfängt und einem Datenspeicher-Puffer 469 zuführt. Eine Pufferung durch den Datenspeicher-Puffer 469 ist unter anderem zum Ausgleich des im Datenübertragungsnetzwerkes vorhandenen Jitters notwendig. Da diese Pufferung zu einer Verzögerung der Datenpakete führt, ist der Datenspeicher-Puffer 469 bevorzugt sehr klein gewählt, um eine Verzögerungszeit unter 3ms, bevorzugt unter 1ms, besonders bevorzugt unter 0,5ms zu gewährleisten.

Die zweite Verarbeitungseinheit ist vorzugsweise ein "Field Programmable Gate Array" (FPGA) oder ein schneller Prozessor. Der Datenspeicher-Puffer 469 erhält seine Taktfrequenz von einem Taktgenerator 466, der in der zweiten Verarbeitungseinheit 462 vorhanden ist. Der Datenspeicher-Puffer 469 hat eine Verbindung zu dem Taktgenerator 466 und sendet ein Signal an den Taktgenerator 466, wobei das Signal die Taktfrequenz des Taktgenerators 466 in Abhängigkeit des Füllstands des Datenspeicher-Puffers 469 variiert. Der Datenspeicher-Puffer 469 leitet die empfangen Datenpakte an eine Entpackungseinheit 452 weiter, die aus den Datenpaketen einen zweiten digitalen Datenstrom 465 und/oder Daten 491 erzeugt und an eine Steuereinheit 468 sendet. Die Steuereinheit 468 steuert, welche Datenströme 465 respektive Daten 491 an eine Ausgangsschnittstelle 481 gesendet werden. Die Ausgangsschnittstelle 481 umfasst einen Digital/Analog-Wandler 463 zur Umwandlung des empfangenen zweiten digitalen Datenstroms 465 in ein analoges Signal 471. Daten 491, welche von der Steuereinheit 468 gesendet werden, werden direkt an der Ausgangsschnittstelle 481 bereitgestellt.

Es können mehrere Ausgangsschnittstellen 481 an die Steuereinheit 468 angebunden werden, wobei jeweils ein zu empfangendes Gerät mit je einer Ausgangsschnittstelle 481 verbunden ist. Denkbar ist auch, eine Ausgangsschnittstelle 481 vorzusehen, die mit der Steuereinheit 468 verbunden ist und mehrere Anschlüsse für empfangsseitige Geräte zur Verfügung stellt. Die Steuereinheit 468 steuert, welche Datenströme 465 respektive Daten 491 zu welcher Ausgangsschnittstelle 481 gesendet werden. Somit legt die Steuereinheit 468 auch fest, zu welchem empfangsseitigen Gerät die Daten 491 respektive analogen Signale 471 gesendet werden. Die Steuereinheit 468 ist mit einer Konfigurationseinheit 449 verbunden, die beispielsweise manuell durch eine Einheit konfiguriert wird, die festlegt, welches empfangsseitige Gerät ein analog Signal respektive Daten erhält.

Es ist aber auch denkbar, dass die Konfigurationseinheit anhand eines festgelegten Schemas die Verschaltung festlegt. Beispielsweise, kann das Schema vorsehen, dass analoge Signale respektive Daten bei einem erkannten Defekt eines empfangsseitigen Geräts zum nächstkommenden empfangsseitigen Gerät oder zu einem vorab definierten empfangsseitigen Gerät geleitet werden. Dasempfangsseitige Gerät wird also nach Verfügbarkeit ausgewählt, oder auch unter Berücksichtigung anderer Parameter der empfangsseitigen Geräte, nämlich Reichweite, Modulationsart, Sende/Empfangsfrequenzen und ähnlichem.

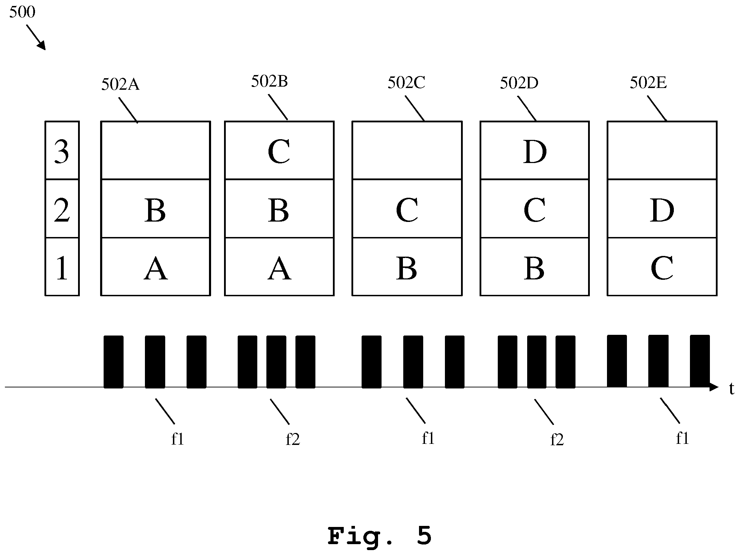

Fig. 5 zeigt ein Schema des Datenpakete-Puffers 469, der sich in der zweiten Verarbeitungseinheit 462 innerhalb des empfangsseitigen Protokollwandlers 460 des erfindungsgemäßen Systems befindet. Das Schema zeigt einen Datenspeicher 500 mit verschiedenen Füllständen 502A-502E, der nach dem "First in First Out" (FIFO) Prinzip arbeitet und eine Speicherkapazität von drei Datenpaketen aufweist.

Es sind auch andere Speicherarten mit anderen Speicherverfahren denkbar. Bevorzugt weist der Datenspeicher-Puffer eine Kapazität zur Speicherung von bis zu drei Datenpaketen auf. Eine niedrigere oder auch höhere Speicherkapazität ist natürlich auch denkbar.

Unterhalb der dargestellten Füllstände 502A-502E ist die zum jeweiligen Füllstand gehörige Taktfrequenz angedeutet. Gemäß Fig. 5 pendelt die Taktfrequenz ständig zwischen zwei Frequenzwerten f1 und f2 hin und her. Der Frequenzwert f1 ist um einen definierten Wert d kleiner als die Taktfrequenz des sendeseitigen Taktgebers 346. Der Frequenzwert f2 ist um einen definierten Wert d größer als die Taktfrequenz des sendeseitigen Taktgebers. Der Wert d entspricht also einem bestimmten Frequenzwert, der von der Frequenz des sendeseitigen Taktgebers 346 abgezogen bzw. hinzuaddiert wird.

Der Datenspeicher 500 ist zunächst mit den Datenpaketen A und B gefüllt und weist den Füllstand 502A auf. Unterhalb dieses Füllstands 502A ist die Taktfrequenz f1 des empfangsseitigen Taktgebers angedeutet. Wenn ein weiteres Datenpaket im Datenspeicher abgelegt wird, wie mit Füllstand 502B gezeigt, erhöht sich die Taktfrequenz auf den Wert f2. Durch die Erhöhung der Taktfrequenz sinkt der Füllstand des Datenspeichers (502C) und die Taktfrequenz sinkt wieder auf den Wert f1. Es kommt somit zu einem ständigen hin- und herpendeln der empfangsseitigen Taktrate zwischen f1 und f2 in Abhängigkeit der Füllstandsänderung des Datenspeichers.

Es ist auch denkbar, insbesondere bei einer höheren Speicherkapazität des Datenpakete-Puffers, dass mit jeder Zunahme des Füllstandes die Taktrate f des empfangsseitigen Protokollwandlers um einen Wert Δf erhöht wird und mit jeder Abnahme des Füllstandes die Taktrate um den Wert Δf reduziert wird.

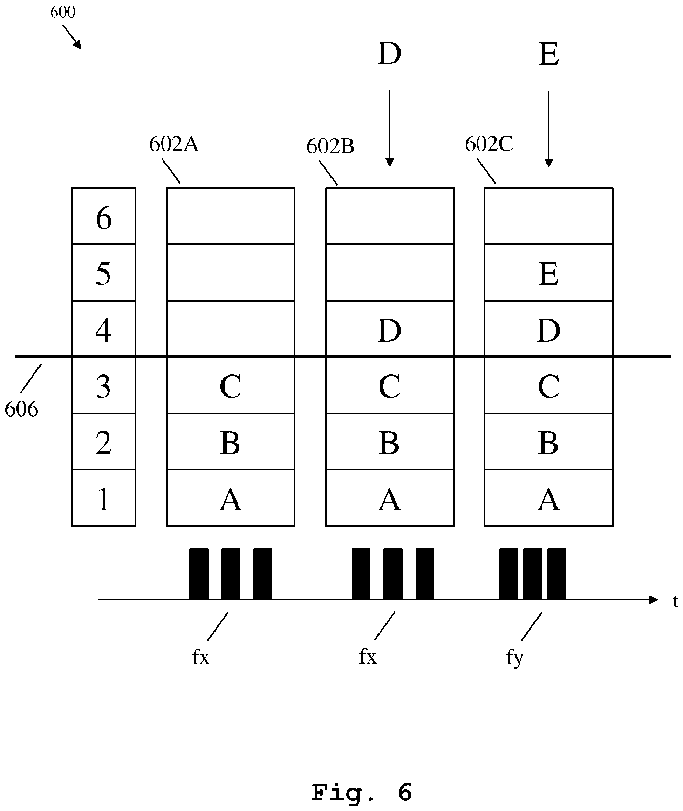

Fig. 6 zeigt ebenfalls einen Datenspeicher 600 nach dem "First in First Out" (FIFO) Prinzip mit verschiedenen Füllständen 602A-602C und mit einem definierten Schwellwert 606 für den Füllstand des Datenspeichers, wobei eine Änderung der Taktfrequenz fx erst erfolgt, wenn ein definierter Schwellwert überschritten wird und der Füllstand des Datenspeichers weiter steigt.

Gemäß Fig. 6 liegt der gewählte Schwellwert 606 oberhalb der dritten Speicherzelle des Datenspeichers 600. Der Datenspeicher Füllstand 602A weist drei befüllte Speicherzellen auf, die mit den Datenpaketen A, B und C belegt sind. Dieser Füllstand führt zu einer Taktrate fx des empfangsseitigen Taktgebers 466. Auch ein Überschreiten des Schwellwertes 606, indem eine vierte Speicherzelle des Datenspeichers mit einem weiteren Datenpakt D gefüllt und somit der Füllstand 602B erreicht wird, führt nicht zu einer Änderung der Taktrate fx. Erst ein weiteres Ansteigen des Datenspeicher-Füllstandes 602C, der nun ein weiteres Datenpaket E beinhaltet, führt zur Erhöhung der Taktfrequenz auf den Wert fy. Die Taktfrequenz fy ist höher als die Taktfrequenz fx.

Es auch denkbar, dass bereits bei einem Überschreiten eines definierten Schwellwertes die Taktrate erhöht wird.

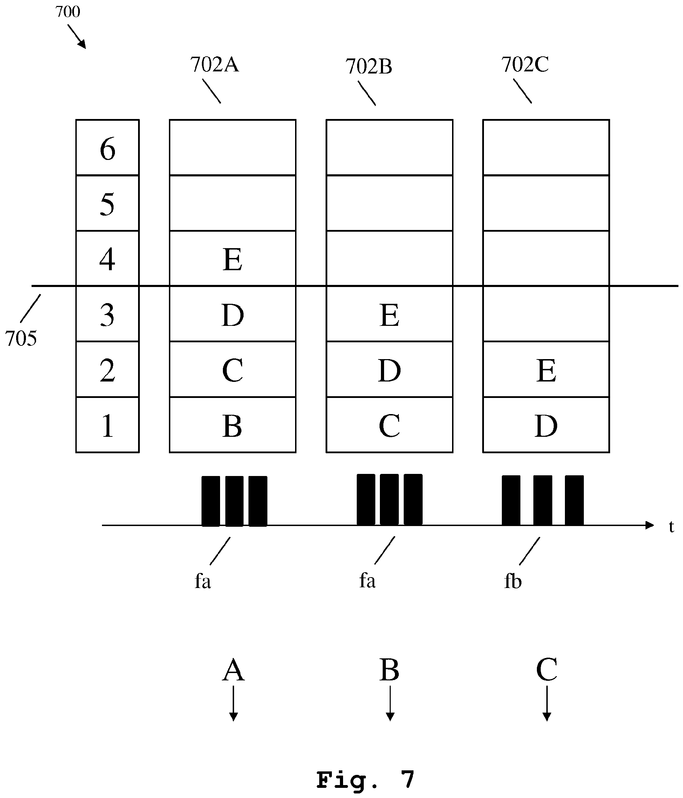

Fig. 7 zeigt ebenfalls einen Datenspeicher 700 nach dem "First in First Out" (FIFO) Prinzip mit verschiedenen Füllständen 702A-702C mit einem definierten Schwellwert 705 für den Füllstand des Datenspeichers, wobei eine Änderung der Taktfrequenz fa erst bei der Unterschreitung des definierten Schwellwertes 705 und einem weiteren Absinken des Füllstands erfolgt.

Gemäß Fig. 7 liegt der gewählte Schwellwert 705 oberhalb der dritten Speicherzelle des Datenspeichers 700. Der Datenspeicher-Füllstand 702A weist vier gefüllte Speicherzellen auf, die mit den Datenpaketen B, C, D und E belegt sind. Das Datenpaket A wurde, wie in der Fig. 7 gezeigt, aus dem Speicher ausgelesen. Der Datenspeicher-Füllstand 702A führt zu einer Taktrate fa des empfangsseitigen Taktgebers 466. Auch ein Unterschreiten des Schwellwertes 705, indem ein weiteres Datenpaket B ausgelesen wird, wie mit Datenspeicher-Füllstand 702B gezeigt, führt nicht zu einer Änderung der Taktrate fa. Erst ein weiteres Absinken des Füllstandes im Datenspeicher 702C, der nun um ein weiteres Datenpaket C reduziert ist, führt zu einer Änderung der Taktfrequenz fa auf den Wert fb. Die Taktfrequenz fb ist niedriger als die Taktfrequenz fa.

Es auch denkbar, dass bereits bei einem Unterschreiten eines definierten Schwellwertes die Taktrate erhöht wird oder auch, dass die Taktrate bei Überschreitung eines oberen Schwellwertes erhöht und bei der Unterschreitung eines unteren Schwellwertes gesenkt wird.

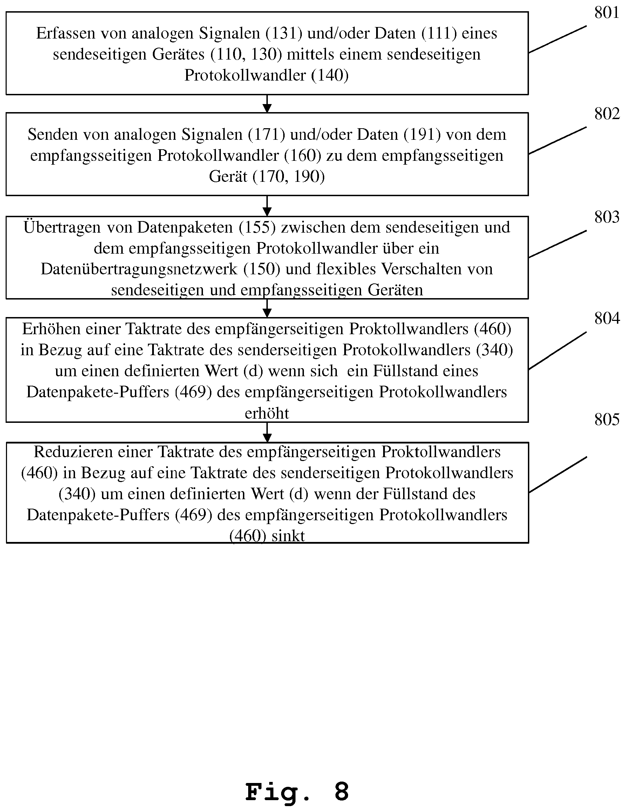

Fig. 8 zeigt ein Flussdiagramm zur Erläuterung des erfindungsgemäßen Verfahrens zur Übertragung von zeitkritischen analogen Signalen und/oder Daten zwischen mindestens einem sendeseitigen Gerät und einem empfangsseitigen Gerät mit zumindest einem sendeseitigen Protokollwandler und mit zumindest einem empfangsseitigen Protokollwandler mit folgenden Verfahrensschritten:
In einem ersten Schritt 801 werden von einem sendeseitigen Protokollwandler 140 analoge Signale 131 und/oder Daten 111 von einem sendeseitigen Gerät 110, 130 erfasst.

In einem zweiten Schritt 802 werden von einem empfangsseitigen Protokollwandler 160 analoge Signale 171 und/oder Daten 191 zu dem empfangsseitigen Gerät 170, 190 gesendet.

In einem dritten Schritt 803 werden die Datenpakete 155, insbesondere Internet Protocol (IP) Datenpakete zwischen dem sendeseitigen 140 und dem empfangsseitigen Protokollwandler 160 über ein Datenübertragungsnetzwerk 150, insbesondere ein Internet Protokoll (IP) Netzwerk, übertragen. Ein flexibles Verschalten von sendeseitigen 110, 130 und empfangsseitigen Geräten 170, 190 wird somit durchführbar.

In einem vierten optionalen Schritt 804 wird die Taktrate bzw. Taktfrequenz 466 des empfängerseitigen Protokollwandlers 460 in Bezug auf die Taktfrequenz 346 des sendeseitigen Protokollwandlers 340 um einen definierten Wert d erhöht, wenn sich ein Füllstand eines Datenpakete-Puffers 469 des empfängerseitigen Protokollwandlers 460 erhöht.

In einem fünften optionalen Schritt 805 wird die Taktrate bzw. Taktfrequenz 466 des empfängerseitigen Protokollwandlers 460 in Bezug auf die Taktfrequenz 346 des sendeseitigen Protokollwandlers 340 um einen definierten Wert d reduziert, wenn der Füllstand des Datenpakte-Puffers 469 des empfängerseitigen Protokollwandlers 460 sinkt.

Bei den verschiedenen Algorithmen, die Taktrate des empfangsseitigen Taktgenerators 466 zu variieren, ist zu berücksichtigen, dass durch die paket-orientierte Übertragung eine Schwankung des Füllstandes des Datenspeicher-Puffers 469 vorgegeben ist. Dies erfordert die Durchführung der Messung des Füllstandes des Datenspeicher-Puffers 469 in dem Intervall der erwarteten zeitlichen Paketabstände.

Die Erfindung ist nicht auf die in der Beschreibung offenbarten Ausführungsformen beschränkt. Von der Erfindung sind insbesondere alle Kombinationen der in den

Patentansprüchen jeweils beanspruchten Merkmale, der in der Beschreibung jeweils beschriebenen Merkmale und der in den Figuren der Zeichnung dargestellten Merkmale mit abgedeckt.

## Patentansprüche

1. System (100) zur Übertragung von zeitkritischen analogen Signalen (131) und digitalen Signalen (111) zwischen mindestens zwei sendeseitigen Geräten (110, 130) und mindestens zwei empfangsseitigen Geräten (170, 190) über ein Datenübertragungsnetzwerk (150), mit:
zumindest einem sendeseitigen Protokollwandler (140), der mit jeweils zumindest zwei der sendeseitigen Geräte (110, 130) verbindbar ist,
wobei der sendeseitige Protokollwandler (140) konfiguriert ist, von den zumindest zwei sendeseitigen Geräten (110, 130) analoge Signale (131) und digitale Signale (131) zu empfangen, und aus den empfangenen analogen Signalen (131) und digitalen Signalen (111) Datenpakete (155) zu erzeugen, und
zumindest einem empfangsseitigen Protokollwandler (160), der mit jeweils zumindest zwei der empfangsseitigen Geräte (170, 190) verbindbar ist,
wobei der empfangsseitige Protokollwandler (160) konfiguriert ist, die vom sendeseitigen Protokollwandler erzeugten Datenpakete (155) in weitere analoge Signale (171) und weitere digitale Signale (191) umzuwandeln, wobei der sendeseitige Protokollwandler (140) konfiguriert ist, die vom sendeseitigen Protokollwandler erzeugten Datenpakete (155) über das Datenübertragungsnetzwerk (150) an den empfangsseitigen Protokollwandler zu übertragen,
wobei eine Verschaltung zwischen den zumindest zwei sendeseitigen Geräten (110, 130) und den zumindest zwei empfangsseitigen Geräten (170, 190) dahingehend flexibel ausgestaltet ist, dass der empfangsseitige Protokollwandler (160) eine empfangsseitige Konfigurationseinheit (449) enthält, die so konfiguriert ist, dass sie unter Berücksichtigung von Parametern der zumindest zwei empfangsseitigen Geräte (170, 190) festlegt, welches der zumindest zwei empfangsseitigen Geräte (170, 190) eines der weiteren analogen Signale (171) erhält und welches der zumindest zwei empfangsseitigen Geräte (170, 190) eines der weiteren digitalen Signale (191) erhält,
wobei die Parameter einen oder mehrere der folgenden Parameter umfassen: Verfügbarkeit, Reichweite, Modulationsart und Sende/Empfangsfrequenzen.

2. System nach Anspruch 1,
**dadurch gekennzeichnet,**
**dass** der sendeseitige Protokollwandler (340) mindestens eine Eingangsschnittstelle (321) zum Anschluss der analogen Signale (331) und/oder der digitalen Signale (311) empfangsseitiger Geräte und eine erste Verarbeitungseinheit (342) aufweist.

3. System nach Anspruch 2,
**dadurch gekennzeichnet,**
**dass** die Eingangsschnittstelle (321) konfiguriert ist, die empfangenen digitalen Signale (311) direkt der ersten Verarbeitungseinheit (342) zuzuführen und/oder mindestens einen Analog/Digitalwandler (341) aufweist, der konfiguriert ist, die empfangenen analogen Signale (331) zu erfassen, in einen ersten digitalen Datenstrom (345) umzuwandeln und der ersten Verarbeitungseinheit (342) zuzuführen.

4. System nach Anspruch 2,
**dadurch gekennzeichnet,**
**dass** die erste Verarbeitungseinheit (342) konfiguriert ist, den ersten digitalen Datenstrom (345) und/oder die digitalen Signale (311) zu erfassen und daraus Datenpakete (355) zu generieren.

5. System nach einem der Ansprüche 2 bis 4,
**dadurch gekennzeichnet,**
**dass** die erste Verarbeitungseinheit (342) konfiguriert ist Datenpakete (355) mit einem Paketintervall kleiner 3ms, bevorzugt kleiner 1ms und weiter bevorzugt kleiner 0,5ms, zu erzeugen.

6. System nach einem der Ansprüche 2 bis 5,
**dadurch gekennzeichnet,**
**dass** die erste Verarbeitungseinheit (342) konfiguriert ist Datenpakete durch Hinzufügen einer definierten Information im Type of Service Feld (ToS-Feld) im Kopfdatenbereich der Datenpakete als Prioritäts-Datenpakete festzulegen.

7. System nach einem der Ansprüche 1 bis 6,
**dadurch gekennzeichnet,**
**dass** der empfangsseitige Protokollwandler (460) eine zweite Verarbeitungseinheit (462) und mindestens eine Ausgangschnittstelle (481) zur Ausgabe der weiteren analogen Signale (471) und/oder weiteren digitalen Signale (491) aufweist.

8. System nach Anspruch 7,
**dadurch gekennzeichnet,**
**dass** die zweite Verarbeitungseinheit (462) einen Datenpakete-Puffer (469) und einen Taktgenerator (466) aufweist und die zweite Verarbeitungseinheit (462) konfiguriert ist, basierend auf einem Füllstand des Datenpakete-Puffers (469) die Taktrate des Taktgenerators (466) zu variieren.

9. System nach Anspruch 7 oder 8,
**dadurch gekennzeichnet,**
**dass** die zweite Verarbeitungseinheit (462) konfiguriert ist aus den empfangenen Datenpaketen (455) einen zweiten digitalen Datenstrom (465) zu erzeugen und an die Ausgangsschnittstelle (481) weiterzuleiten.

10. System nach Anspruch 7,
**dadurch gekennzeichnet,**
**dass** die Ausgangsschnittstelle (481) konfiguriert ist, die von der zweiten Verarbeitungseinheit (462) empfangenen weiteren digitalen Signale (491) direkt an einem ersten Ausgang bereitzustellen und mindestens einen Digital/Analogwandler (463) aufweist, der konfiguriert ist den zweiten digitalen Datenstrom (465) in ein weiteres analoges Signal (471) umzuwandeln und an einem zweiten Ausgang bereitzustellen.

11. Verfahren zur Übertragung von zeitkritischen analogen Signalen (131) und digitalen Signalen (111) zwischen mindestens zwei sendeseitigen Geräten (110, 130) und mindestens zwei empfangsseitigen Geräten (170, 190) mit zumindest einem sendeseitigen Protokollwandler (140) und mit zumindest einem empfangsseitigen Protokollwandler (160) mit folgenden Verfahrensschritten:
- Erfassen von analogen Signalen und digitalen Signalen der sendeseitigen Geräte (110, 130) mit dem sendeseitigen Protokollwandler (140),
- Erzeugen von Datenpaketen (155) aus den erfassten analogen Signalen (131) und digitalen Signalen (111) mit dem sendeseitigen Protokollwandler (140),
- Umwandeln der von dem sendeseitigen Protokollwandler (140) erzeugten Datenpakete (155) in weitere analoge Signale (171) und weitere digitale Signale (191) mit dem empfangsseitigen Protokollwandler (160),
- Senden der weiteren analogen Signale und weiteren digitalen Signale von dem empfangsseitigen Protokollwandler zu den empfangsseitigen Geräten (110, 130),
wobei die Datenpakete (155) zwischen dem sendeseitigen Protokollwandler (140) und dem empfangsseitigen Protokollwandler (160) über ein Datenübertragungsnetzwerk (150) übertragen werden und eine Verschaltung zwischen den zumindest zwei sendeseitigen Gräten (110, 130) und den zumindest zwei empfangsseitigen Geräten (170, 190) dahingehend flexibel ausgestaltet ist,
dass eine empfangsseitige Konfigurationseinheit (449) des empfangsseitigen Protokollwandlers (160) unter Berücksichtigung von Parametern der zumindest zwei empfangsseitigen Geräte (170, 190) festlegt, welches der zumindest zwei empfangsseitigen Geräte (170, 190) eines der weiteren analogen Signale (171) erhält und welches der zumindest zwei empfangsseitigen Geräte (170, 190) eines der weiteren digitalen Signale (191) erhält,
wobei die Parameter einen oder mehrere der folgenden Parameter umfassen: Verfügbarkeit, Reichweite, Modulationsart und Sende/Empfangsfrequenzen.

12. Verfahren nach Anspruch 11,
**dadurch gekennzeichnet,**
**dass** eine Taktrate des empfängerseitigen Protokollwandlers (460) in Bezug auf eine Taktrate des senderseitigen Protokollwandlers (340) um einen definierten Wert (d) erhöht wird, wenn sich ein Füllstand eines Datenpaket-Puffers (469) des empfängerseitigen Protokollwandlers (460) erhöht, und/oder
**dass** die Taktrate des empfängerseitigen Protokollwandlers (460) um einen definierten Wert (d) reduziert wird, wenn der Füllstand des Datenpakte-Puffers (469) des empfängerseitigen Protokollwandlers (460) sinkt.

13. Verfahren nach Anspruch 11 oder 12,
**dadurch gekennzeichnet,**
**dass** vom sendeseitigen Protokollwandler (340) erfasste analoge Signale (331) in einen ersten digitalen Datenstrom (345) umgewandelt werden und der erste digitale Datenstrom (345) und/oder die erfassten digitalen Signale (311) in Datenpakte (355) umgewandelt werden, und/oder
**dass** die vom empfangsseitigen Protokollwandler (460) erfassten Datenpakete (455) in einen zweiten digitalen Datenstrom (465) respektive weitere digitale Signale (491) umgewandelt werden.

14. Verfahren nach Anspruch 11,
**dadurch gekennzeichnet,**
**dass** die Taktrate des empfangsseitigen Protokollwandlers (460) erhöht wird, wenn der Füllstand seines Datenpakete-Puffers (469) einen definierten Schwellwert (606) überschreitet und der Füllstand des Datenpakete-Puffers (469) weiter steigt und/oder
**dass** die Taktrate des empfangsseitigen Protokollwandlers (460) reduziert wird, wenn der Füllstand seines Datenpakete-Puffers (469) einen definierten Schwellwert (705) unterschreitet und der Füllstand des Puffers (469) weiter sinkt.

15. Verfahren nach Anspruch 12,
**dadurch gekennzeichnet,**
**dass** die Ermittlung des Füllstands des Datenpakete-Puffers (469) im Intervall der erwarteten zeitlichen Paketabstände erfolgt.

## Claims

1. System (100) for transmitting time-critical analogue signals (131) and digital signals (111) between at least two transmission-side devices (110, 130) and at least two receiving-side devices (170, 190) via a data transmission network (150), comprising:
at least one transmission-side protocol converter (140) which can be connected to in each case at least two of the transmission-side devices (110, 130),
wherein the transmission-side protocol converter (140) is configured to receive analogue signals (131) and digital signals (111) from the at least two transmission-side devices (110, 130) and to generate data packets (155) from the received analogue signals (131) and digital signals (111), and
at least one receiving-side protocol converter (160) which can be connected to in each case at least two of the receiving-side devices (170, 190),
wherein the receiving-side protocol converter (160) is configured to convert the data packets (155) generated by the transmission-side protocol converter into further analogue signals (171) and further digital signals (191), wherein the transmission-side protocol converter (140) is configured to transmit the data packets (155) generated by the transmission-side protocol converter to the receiving-side protocol converter via the data transmission network (150),
wherein a connection between the at least two transmission-side devices (110, 130) and the at least two receiving-side devices (170, 190) is designed to be flexible to the effect that the receiving-side protocol converter (160) contains a receiving-side configuration unit (449) which is configured in such a way that, while taking parameters of the at least two receiving-side devices (170, 190) into account, it defines which of the at least two receiving-side devices (170, 190) receives one of the further analogue signals (171) and which of the at least two receiving-side devices (170, 190) receives one of the further digital signals (191),
wherein the parameters comprise one or more of the following parameters: availability, range, type of modulation, and transmission/reception frequencies.

2. System according to claim 1,
**characterized**
**in that** the transmission-side protocol converter (340) has at least one input interface (321) for the connection of the analogue signals (331) and/or digital signals (311) from receiving-side devices and has a first processing unit (342).

3. System according to claim 2,
**characterized**
**in that** the input interface (321) is configured to feed the received digital signals (311) directly to the first processing unit (342) and/or has at least one analogue/digital converter (341) which is configured to capture the received analogue signals (331), to convert them into a first digital data stream (345), and to feed this to the first processing unit (342).

4. System according to claim 2,
**characterized**
**in that** the first processing unit (342) is configured to capture the first digital data stream (345) and/or the digital signals (311) and to generate data packets (355) therefrom.

5. System according to any one of claims 2 to 4,
**characterized**
**in that** the first processing unit (342) is configured to generate data packets (355) with a packet interval of less than 3 ms, preferably less than 1 ms, and more preferably less than 0.5 ms.

6. System according to any one of claims 2 to 5,
**characterized**
**in that** the first processing unit (342) is configured to define data packets as priority data packets by adding defined information in the Type of Service field (ToS field) in the header area of the data packets.

7. System according to any one of claims 1 to 6,
**characterized**
**in that** the receiving-side protocol converter (460) has a second processing unit (462) and has at least one output interface (481) for outputting the further analogue signals (471) and/or further digital signals (491).

8. System according to claim 7,
**characterized**
**in that** the second processing unit (462) has a data packet buffer (469) and a clock generator (466), and the second processing unit (462) is configured to vary the clock rate of the clock generator (466) on the basis of a fill level of the data packet buffer (469).

9. System according to claim 7 or 8,
**characterized**
**in that** the second processing unit (462) is configured to generate a second digital data stream (465) from the received data packets (455) and to forward it to the output interface (481) .

10. System according to claim 7,
**characterized**
**in that** the output interface (481) is configured to make the further digital signals (491) received from the second processing unit (462) available directly at a first output and has at least one digital/analogue converter (463) which is configured to convert the second digital data stream (465) into a further analogue signal (471) and to make this available at a second output.

11. Method for transmitting time-critical analogue signals (131) and digital signals (111) between at least two transmission-side devices (110, 130) and at least two receiving-side devices (170, 190) by means of at least one transmission-side protocol converter (140) and at least one receiving-side protocol converter (160), the method comprising the following method steps:
- capturing analogue signals and digital signals from the transmission-side devices (110, 130) by means of the transmission-side protocol converter (140),
- generating data packets (155) from the captured analogue signals (131) and digital signals (111) by means of the transmission-side protocol converter (140),
- converting the data packets (155) generated by the transmission-side protocol converter (140) into further analogue signals (171) and further digital signals (191) by means of the receiving-side protocol converter (160),
- transmitting the further analogue signals and further digital signals from the receiving-side protocol converter to the receiving-side devices (110, 130),
wherein the data packets (155) are transmitted between the transmission-side protocol converter (140) and the receiving-side protocol converter (160) via a data transmission network (150), and a connection between the at least two transmission-side devices (110, 130) and the at least two receiving-side devices (170, 190) is designed to be flexible to the effect that, while taking parameters of the at least two receiving-side devices (170, 190) into account, a receiving-side configuration unit (449) of the receiving-side protocol converter (160) defines which of the at least two receiving-side devices (170, 190) receives one of the further analogue signals (171) and which of the at least two receiving-side devices (170, 190) receives one of the further digital signals (191),
wherein the parameters comprise one or more of the following parameters: availability, range, type of modulation, and transmission/reception frequencies.

12. Method according to claim 11,
**characterized**
**in that** a clock rate of the receiver-side protocol converter (460) is increased by a defined value (d) relative to a clock rate of the transmitter-side protocol converter (340) when a fill level of a data packet buffer (469) of the receiver-side protocol converter (460) increases, and/or
**in that** the clock rate of the receiver-side protocol converter (460) is reduced by a defined value (d) when the fill level of the data packet buffer (469) of the receiver-side protocol converter (460) decreases.

13. Method according to claim 11 or 12,
**characterized**
**in that** analogue signals (331) captured by the transmission-side protocol converter (340) are converted into a first digital data stream (345), and the first digital data stream (345) and/or the captured digital signals (311) are converted into data packets (355), and/or
**in that** the data packets (455) captured by the receiving-side protocol converter (460) are converted into a second digital data stream (465) and/or further digital signals (491), respectively.

14. Method according to claim 11,
**characterized**
**in that** the clock rate of the receiving-side protocol converter (460) is increased when the fill level of the data packet buffer (469) thereof is above a defined threshold (606) and the fill level of the data packet buffer (469) is continuing to increase, and/or
**in that** the clock rate of the receiving-side protocol converter (460) is reduced when the fill level of the data packet buffer (469) thereof is below a defined threshold (705) and the fill level of the buffer (469) is continuing to decrease.

15. Method according to claim 12,
**characterized**
**in that** the fill level of the data packet buffer (469) is determined in the interval of the expected packet time intervals.

## Revendications

1. Système (100) pour la transmission de signaux analogiques (131) et signaux numériques (111) critiques en temps entre au moins deux appareils côté envoi (110, 130) et au moins deux appareils côté réception (170, 190) par l'intermédiaire d'un réseau de transmission de données (150), avec :
au moins un convertisseur de protocole côté envoi (140), qui peut être connecté à respectivement au moins deux des appareils côté envoi (110, 130),
dans lequel le convertisseur de protocole côté envoi (140) est configuré pour recevoir des au moins deux appareils côté envoi (110, 130) des signaux analogiques (131) et signaux numériques (111), et pour produire à partir des signaux analogiques (131) et signaux numériques (111) reçus des paquets de données (155), et
au moins un convertisseur de protocole côté réception (160), qui peut être connecté à respectivement au moins deux des appareils côté réception (170, 190),
dans lequel le convertisseur de protocole côté réception (160) est configuré pour convertir les paquets de données (155) produits par le convertisseur de protocole côté envoi en d'autres signaux analogiques (171) et d'autres signaux numériques (191),
dans lequel le convertisseur de protocole côté envoi (140) est configuré pour transmettre les paquets de données (155) produits par le convertisseur de protocole côté envoi au convertisseur de protocole côté réception par l'intermédiaire du réseau de transmission de données (150),
dans lequel un câblage entre les au moins deux appareils côté envoi (110, 130) et les au moins deux appareils côté réception (170, 190) est conçu de manière flexible en ce sens que le convertisseur de protocole côté réception (160) contient une unité de configuration côté réception (449), qui est configurée de sorte qu'elle détermine avec prise en compte de paramètres des au moins deux appareils côté réception (170, 190) lequel des au moins deux appareils côté réception (170, 190) reçoit l'un des autres signaux analogiques (171) et lequel des au moins deux appareils côté réception (170, 190) reçoit l'un des autres signaux numériques (191),
dans lequel les paramètres comprennent un ou plusieurs des paramètres suivants : disponibilité, portée, type de modulation et fréquences d'envoi/de réception.

2. Système selon la revendication 1,
**caractérisé en ce**
**que** le convertisseur de protocole côté envoi (340) présente au moins une interface d'entrée (321) pour le raccordement des signaux analogiques (331) et/ou des signaux numériques (311) d'appareils côté réception et une première unité de traitement (342) .

3. Système selon la revendication 2,
**caractérisé en ce**
**que** l'interface d'entrée (321) est configurée pour amener les signaux numériques (311) reçus directement à la première unité de traitement (342) et/ou présente au moins un convertisseur analogique-numérique (341), qui est configuré pour acquérir les signaux analogiques (331) reçus, pour les convertir en un premier flux de données numériques (345) et pour les amener à la première unité de traitement (342).

4. Système selon la revendication 2,
**caractérisé en ce**
**que** la première unité de traitement (342) est configurée pour acquérir le premier flux de données numériques (345) et/ou les signaux numériques (311) et pour générer des paquets de données (355) à partir à partir de ceux-ci.

5. Système selon l'une quelconque des revendications 2 à 4,
**caractérisé en ce**
**que** la première unité de traitement (342) est configurée pour produire des paquets de données (355) avec un intervalle de paquets inférieur à 3 ms, de préférence inférieur à 1 ms et plus préférablement inférieur à 0,5 ms.

6. Système selon l'une quelconque des revendications 2 à 5,
**caractérisé en ce**
**que** la première unité de traitement (342) est configurée pour déterminer des paquets de données par ajout d'une information définie dans le champ type de service (champ TOS) dans la zone de données d'en-tête des paquets de données comme paquets de données de priorité.

7. Système selon l'une quelconque des revendications 1 à 6,
**caractérisé en ce**
**que** le convertisseur de protocole côté réception (460) présente une deuxième unité de traitement (462) et au moins une interface de sortie (481) pour l'émission des autres signaux analogiques (471) et/ou d'autres signaux numériques (491).

8. Système selon la revendication 7,
**caractérisé en ce**
**que** la deuxième unité de traitement (462) présente une mémoire tampon de paquets de données (469) et un générateur d'horloge (466) et la deuxième unité de traitement (462) est configurée pour modifier sur la base d'un niveau de remplissage de la mémoire tampon de paquets de données (469) le rythme d'horloge du générateur d'horloge (466).

9. Système selon la revendication 7 ou 8,
**caractérisé en ce**
**que** la deuxième unité de traitement (462) est configurée pour produire à partir des paquets de données (455) reçus un deuxième flux de données numériques (465) et pour les transmettre à l'interface de sortie (481).

10. Système selon la revendication 7,
**caractérisé en ce**
**que** l'interface de sortie (481) est configurée pour fournir les autres signaux numériques (491) reçus par la deuxième unité de traitement (462) directement à une première sortie et présente au moins un convertisseur numérique/analogique (463), qui est configuré pour convertir le deuxième flux de données numériques (465) en un autre signal analogique (471) et pour le fournir à une deuxième sortie.

11. Procédé pour la transmission de signaux analogiques (131) et signaux numériques (111) critiques en temps entre au moins deux appareils côté envoi (110, 130) et au moins deux appareils côté réception (170, 190) avec au moins un convertisseur de protocole côté envoi (140) et avec au moins un convertisseur de protocole côté réception (160) avec les étapes de procédé suivantes :
- l'acquisition de signaux analogiques et de signaux numériques des appareils côté envoi (110, 130) avec le convertisseur de protocole côté envoi (140),
- la génération de paquets de données (155) à partir des signaux analogiques (131) et signaux numériques (111) acquis avec le convertisseur de protocole côté envoi (140),
- la conversion des paquets de données (155) générés par le convertisseur de protocole côté envoi (140) en d'autres signaux analogiques (171) et d'autres signaux numériques (191) avec le convertisseur de protocole côté réception (160),
- l'émission des autres signaux analogiques et autres signaux numériques à partir du convertisseur de protocole côté réception vers les appareils côté réception (110, 130),
dans lequel les paquets de données (155) sont transmis entre le convertisseur de protocole côté envoi (140) et le convertisseur de protocole côté réception (160) par l'intermédiaire d'un réseau de transmission de données (150) et un câblage entre les au moins deux appareils côté envoi (110, 130) et les au moins deux appareils côté réception (170, 190) est conçu de manière flexible en ce sens
qu'une unité de configuration (449) côté réception du convertisseur de protocole côté réception (160) détermine avec prise en compte de paramètres des au moins deux appareils côté réception (170, 190) lequel des au moins deux appareils côté réception (170, 190) reçoit l'un des autres signaux analogiques (171) et lequel des au moins deux appareils côté réception (170, 190) reçoit l'un des autres signaux numériques (191),
dans lequel les paramètres comprennent un ou plusieurs des paramètres suivants : disponibilité, portée, type de modulation et fréquences d'envoi/de réception.

12. Procédé selon la revendication 11,
**caractérisé en ce**
**qu'**un rythme d'horloge du convertisseur de protocole côté réception (460) est augmentée par rapport à un rythme d'horloge du convertisseur de protocole côté envoi (340) d'une valeur (d) définie, lorsqu'un niveau de remplissage d'une mémoire tampon de paquets de données (469) du convertisseur de protocole côté réception (460) augmente, et/ou
**que** le rythme d'horloge du convertisseur de protocole côté réception (460) est réduite d'une valeur (d) définie, lorsque le niveau de remplissage de la mémoire tampon de paquets de données (469) du convertisseur de protocole côté réception (460) diminue.

13. Procédé selon la revendication 11 ou 12,
**caractérisé en ce**
**que** les signaux analogiques (331) acquis par le convertisseur de protocole côté envoi (340) sont convertis en un premier flux de données numériques (345) et le premier flux de données numériques (345) et/ou les signaux numériques (311) acquis sont convertis en paquets de données (355), et/ou
**que** les paquets de données (455) acquis par le convertisseur de protocole côté réception (460) sont convertis en un deuxième flux de données numériques (465) ou d'autres signaux numériques (491).

14. Procédé selon la revendication 11,
**caractérisé en ce**
**que** le rythme d'horloge du convertisseur de protocole côté réception (460) est augmentée lorsque le niveau de remplissage de sa mémoire tampon de paquets de données (469) dépasse une valeur seuil (606) définie et le niveau de remplissage de la mémoire tampon de paquets de données (469) continue d'augmenter et/ou
**que** le rythme d'horloge du convertisseur de protocole côté réception (460) est réduite lorsque le niveau de remplissage de sa mémoire tampon de paquets de données (469) passe au-dessous d'une valeur seuil (705) définie et le niveau de remplissage de la mémoire tampon (469) continue de baisser.

15. Procédé selon la revendication 12,
**caractérisé en ce**
**que** la détermination du niveau de remplissage de la mémoire tampon de paquets de données (469) s'effectue dans l'intervalle des écarts de paquets temporels attendus.
